# EUROPÄISCHE PATENTANMELDUNG

(11) **EP 1 302 675 A1**
(43) Veröffentlichungstag der Anmeldung: **16.04.2003**
(21) Anmeldenummer: 02017905.7
(22) Anmeldetag: 09.08.2002
(51) Int. Cl.: F16B 13/14

(54) **Anker zur Verankerung mit Mörtel**

(30) Priorität: 16.08.2001 DE 20113588 U
(71) Anmelder: Fischerwerke Arthur Fischer GmbH & Co. KG, 72178 Waldachtal (DE)
(72) Erfinder: Grün, Jürgen, 79268 Bötzingen (DE); Eckstein, Torsten, 79353 Bahlingen (DE); Steurer, Paul, 79331 Teningen (DE); Dienst, Clemens, 79341 Kenzingen (DE)

(57) **Zusammenfassung**

Die Erfindung betrifft einen Anker (10) zur Verankerung mit Mörtel 38. Die Erfindung schlägt vor, zwei gegeneinander gespannte Schraubenfedern (22, 24) auf die Gewindestange (12) aufzuschrauben und zur Drehsicherung gegeneinander zu spannen (kontern). Die Schraubenfedern (22, 24) sind in einem hinteren Bereich (18) der Ankerstange (12) angeordnet, der bei verankerter Ankerstange (12) aus einem Verankerungsgrund (26) vorsteht. Die Schraubenfedern (22, 24) verkleinern ein Spiel zwischen dem Anker (10) und einem zu befestigenden Gegenstand 32.

## Beschreibung

Die Erfindung betrifft einen Anker zur Verankerung mit Mörtel mit den Merkmalen des Oberbegriffs des Anspruchs 1.

Derartige Anker sind an sich bekannt. Sie weisen eine Ankerstange auf, die mit Mörtel, beispielsweise einem Kunstharzmörtel, in einem Loch in einem Verankerungsgrund verankerbar sind. Der Verankerungsgrund kann eine Wand, Decke oder Boden sein. Das Gewinde muss nicht auf der vollen Länge der Ankerstange ausgebildet sein, es genügt ein Gewinde in einem hinteren Bereich der Ankerstange, der bei verankerter Ankerstange aus dem Verankerungsgrund vorsteht. Auf den aus dem Verankerungsgrund vorstehenden hinteren Bereich der Ankerstange kann ein ein Durchgangsloch aufweisender Gegenstand aufgesetzt und mit einer auf das Gewinde der Ankerstange aufgeschraubten Mutter festgespannt werden (sog. Vorsteckmontage, bei der der Anker im Verankerungsgrund verankert und anschließend der zu befestigende Gegenstand angebracht wird). Für eine sog. Durchsteckmontage eignen sich die bekannten Anker nicht. Bei der Durchsteckmontage wird durch das Durchgangsloch im zu befestigenden Gegenstand ein Bohrloch im Verankerungsgrund angebracht und anschließend der Anker durch das zu befestigende Bauteil hindurch in das Bohrloch im Verankerungsgrund eingebracht. Für die Verankerung mit Mörtel ist das Bohrloch im Verankerungsgrund mit ausreichendem Übermaß vorzusehen, es weist deswegen einen größeren Durchmesser auf als üblicherweise das Durchgangsloch im zu befestigenden Gegenstand. Es lässt sich deswegen das Bohrloch nicht durch den zu befestigenden Gegenstand hindurch im Verankerungsgrund anbringen. Ein größeres Durchgangsloch im zu befestigenden Gegenstand hätte ein unerwünscht großes Spiel zwischen dem zu befestigenden Gegenstand und dem Anker zur Folge.

Der Erfindung liegt die Aufgabe zugrunde, einen Anker der vorstehend erläuterten Art vorzuschlagen, der für eine Durchsteckmontage geeignet ist.

Diese Aufgabe wird erfindungsgemäß durch die Merkmale des Anspruchs 1 gelöst. Der erfindungsgemäße Anker weist einen schraubenförmig gewundenen Draht auf, der auf das Gewinde der Ankerstange aufgesetzt ist und nach Art einer Schraubverbindung in das Gewinde der Ankerstange eingreift. Der Draht ist im hinteren Bereich der Ankerstange angeordnet, der bei verankerter Ankerstange aus dem Verankerungsgrund vorsteht. Der auf die Ankerstange aufgesetzte Draht vergrößert den Durchmesser des Ankers in dem Bereich, der sich bei am Verankerungsgrund befestigtem Gegenstand im Durchgangsloch des befestigten Gegenstandes befindet. Dadurch kann das Durchgangsloch im zu befestigenden Gegenstand einen gleich großen oder größeren Durchmesser wie das Loch im Verankerungsgrund aufweisen. Der im Durchgangsloch des zu befestigenden Gegenstands um die Ankerstange gewundene Draht verkleinert ein Spiel zwischen der Ankerstange und dem zu befestigenden Gegenstand auf ein übliches und tolerierbares Maß.

Die Erfindung hat den Vorteil, dass sie eine Durchsteckmontage ermöglicht. Ein Loch zum Verankern des Ankers kann durch ein Durchgangsloch im zu befestigenden Gegenstand hindurch im Verankerungsgrund angebracht werden. Ein Bohrer wird beim Bohren in den Verankerungsgrund vom Durchgangsloch des zu befestigenden Gegenstandes geführt und kann nicht soweit verlaufen, dass das Durchgangsloch im zu befestigenden Gegenstand das Loch im Verankerungsgrund nicht mehr überdeckt und die Ankerstange nicht durch das Durchgangsloch in das Loch im Verankerungsgrund einbringbar ist. Weiterer Vorteil der Durchsteckmontage ist ihr im Vergleich zur Vorsteckmontage geringerer Aufwand.

Der Draht muss nicht zwingend aus Metall bestehen. Es ist beispielsweise auch ein Kunststoff verwendbar, der schraubenförmige Windungen wie eine Schraubenfeder aufweist. Auch Derartiges soll als Draht im Sinne der Erfindung verstanden werden. Ein Querschnitt des Drahts kann rund oder beispielsweise auch drei- oder viereckig sein.

Der Draht kann beispielsweise eine Schraubenfeder sein. Dies hat den Vorteil, dass er als Massenprodukt preisgünstig erhältlich ist.

Eine Ausgestaltung der Erfindung sieht vor, dass der Draht klemmend auf dem Gewinde der Ankerstange sitzt, er weist also ein Untermaß auf und wird beim Aufschrauben auf das Gewinde der Ankerstange elastisch und/oder plastisch aufgeweitet. Dies vermeidet ein Verdrehen des Drahts auf der Ankerstange, wenn die Ankerstange drehend in den Verankerungsgrund eingebracht wird. Ein Verdrehen des Drahts auf der Ankerstange hätte eine Axialverschiebung des Drahts auf der Ankerstange zur Folge und ist deswegen unerwünscht.

Eine andere Möglichkeit einer Drehsicherung ist das Aufschrauben zweier schraubenförmig gewundener Drähte auf das Gewinde der Ankerstange, wobei die Drähte durch Drehen gegeneinander miteinander verspannt (gekontert) werden. Zum Kontern sieht eine Ausgestaltung der Erfindung plan ausgebildete, aneinander anliegende Stirnflächen der Drähte vor.

Um die Haltewerte des Ankers zu verbessern, sieht eine Ausführungsform vor, dass die Ankerstange in ihrem Verankerungsbereich Vorsprünge nach Art von Bewehrungsstäben aufweist. Auszugversuche haben gezeigt, dass hierdurch gegenüber einem durchgehenden Gewinde deutliche Verbesserungen erzielbar sind. Vorzugsweise wird dabei ein Stück eines Bewehungsstabs aus Betonstabstahl mit einem Gewindestab verbunden und somit die Ankerstange aus zwei Teilen gebildet. Während sich der Betonstabstahl vor allem durch seine Elastizität positiv für die Verankerung auswirkt, gewährleistet ein Gewindestab beispielsweise aus Edelstahl die Korrosionsbeständigkeit des Ankers. Zum Verbinden der beiden Teile eignet sich sowohl das Reibschweißen als auch umformende Verfahren, beispielsweise Rollen oder Börteln.

Die Erfindung wird nachfolgend anhand eines in der Zeichnung dargestellten Ausführungsbeispiels näher erläutert. Es zeigen:
- Figur 1: einen erfindungsgemäßen Anker in Seitenansicht;
- Figur 2: ein weiteres Ausführungsbeispiel des Ankers in Seitenansicht.

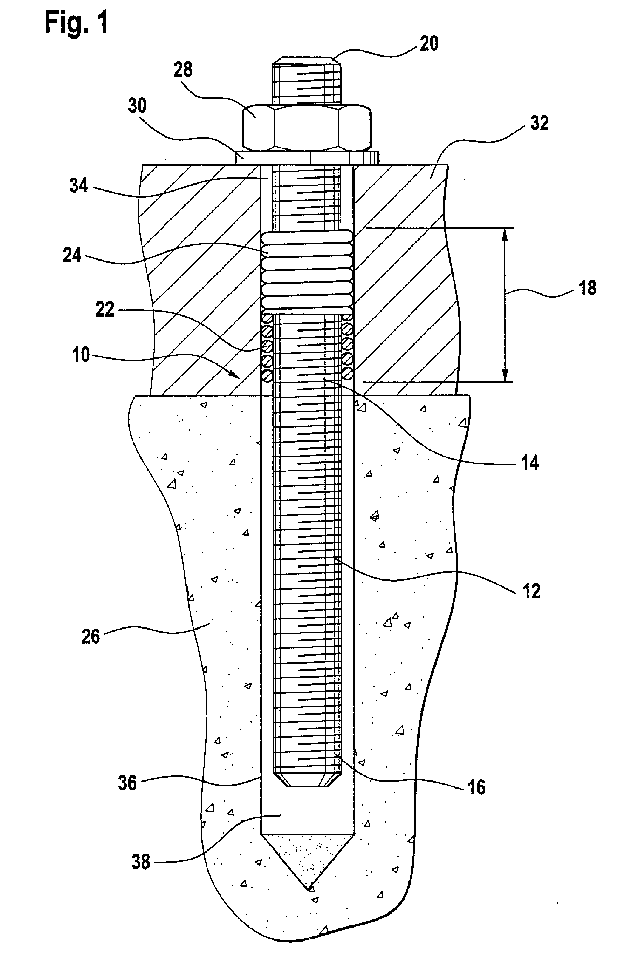

Der in Figur 1 dargestellte, erfindungsgemäße Anker 10 weist eine Ankerstange 12 mit einem Gewinde 14 auf. Ein Ende 16 der Ankerstange 12 ist mit einer keilförmigen Spitze versehen. Dieses Ende 16 wird nachfolgend als vorderes Ende 16 bezeichnet werden, es ist ein beim Setzen des Ankers 10 in Einführrichtung vorderes Ende. In einem hinteren Bereich 18 mit Abstand von einem hinteren Ende 20 der Ankerstange 12 sind zwei Schraubenfedern 22, 24 durch Aufschrauben auf das Gewinde 14 der Ankerstange 12 aufgesetzt. Die Schraubenfedern 22, 24 sind durch Schrauben gegeneinander gespannt (gekontert) und dadurch gegen Drehen auf dem Gewinde 14 der Ankerstange 12 gesichert. Der hintere Bereich 18 der Ankerstange 12, in dem die Schraubenfedern 22, 24 angeordnet sind, steht bei verankertem Anker 10 aus einem Verankerungsgrund 26, also beispielsweise aus einer Decke, Wand oder einem Boden, vor.

Am hinteren Ende 20 ist eine Mutter 28 auf die Ankerstange 12 aufgeschraubt. Unter die Mutter 28 ist eine Unterlegscheibe 30 gelegt.

Der Anker 10 dient zur Befestigung eines zu verankernden Gegenstandes 32 am Verankerungsgrund 26. Der zu verankernde Gegenstand 32 kann beispielsweise ein Fuß einer Maschine, eine Konsole oder dgl. sein. In der Zeichnung ist ein Bruchteil des zu verankernden Gegenstandes 32 dargestellt. Die Verankerung erfolgt in sog. Durchsteckmontage. Der zu verankernde Gegenstand 32 weist ein Durchgangsloch 34 auf, dessen Durchmesser ausreicht, um die Ankerstange 12 mit den aufgesetzten Schraubenfedern 22, 24 aufzunehmen. Zur Befestigung wird der zu befestigende Gegenstand 32 am Verankerungsgrund 26 angesetzt und es wird ein Loch 36 durch das Durchgangsloch 34 im zu befestigenden Gegenstand 32 hindurch in den Verankerungsgrund 26 gebohrt. Da das Durchgangsloch 34 im zu befestigenden Gegenstand 32 einen Bohrer beim Bohren des Lochs 36 in den Verankerungsgrund 26 führt ist sichergestellt, dass das Durchgangsloch 34 im zu befestigenden Gegenstand 32 das Loch 36 im Verankerungsgrund 26 überdeckt und der Anker 10 durch das Durchgangsloch 34 im zu befestigenden Gegenstand 32 hindurch in das Loch 36 im Verankerungsgrund 26 gesteckt werden kann.

Nach dem Bohren des Lochs 36 in den Verankerungsgrund 26 wird ein Mörtel 38, beispielsweise ein Ein- oder Mehrkomponenten-Kunstharzmörtel in das Loch 36 im Verankerungsgrund 26 eingebracht. Anschließend wird der Anker 10 mit seinem vorderen oder Einführende 16 voran durch das Durchgangsloch 34 im zu befestigenden Gegenstand 32 hindurch in das Loch 36 im Verankerungsgrund 26 eingebracht. Dabei verdrängt die Ankerstange 12 den Mörtel, so dass der Mörtel einen Zwischenraum zwischen der Ankerstange 12 und einer Wandung des Lochs 36 im Verankerungsgrund 26 ausfüllt. Der hintere Bereich 18 des Ankers 10, in dem sich die Schraubenfedern 22, 24 befinden, steht aus dem Verankerungsgrund 26 vor. Die Schraubenfedern 22, 24 befinden sich innerhalb des Durchgangslochs 34 des zu befestigenden Gegenstands 32 und verringern ein Radialspiel zwischen dem Anker 10 und dem zu befestigenden Gegenstand 32.

Nach dem Aushärten des Mörtels 38 wird die Mutter 28 angezogen und der zu befestigende Gegenstand 32 dadurch gegen den Verankerungsgrund 26 gespannt.

Wird der Anker 10 ohne Drehung in das Loch 36 im Verankerungsgrund 26 eingebracht, ist eine Drehsicherung der Schraubenfedern 22, 24 nicht erforderlich. In diesem Fall genügt eine der beiden Schraubenfedern 22, 24, die zweite, zur Konterung vorgesehene Schraubenfeder 22, 24 kann weggelassen werden.

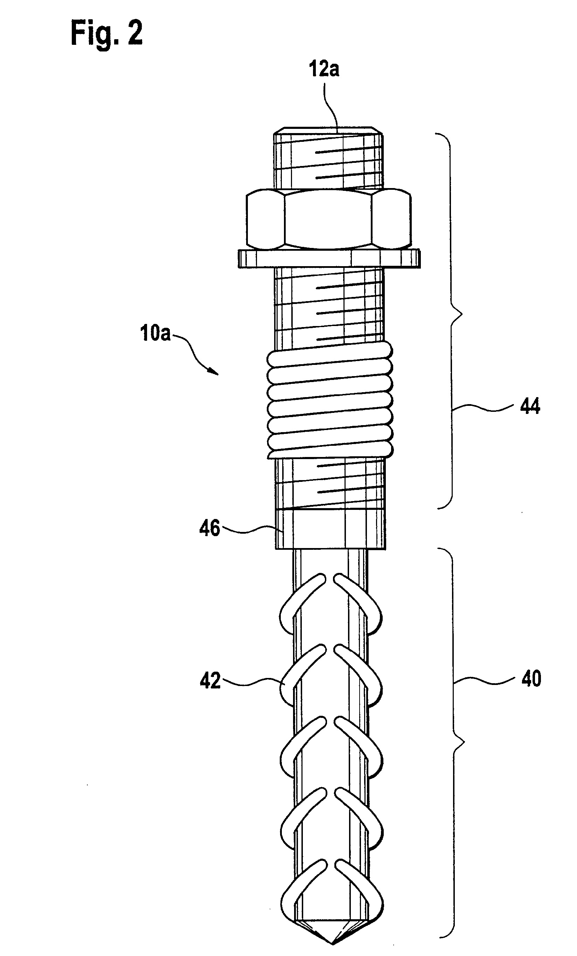

Der in Figur 2 dargestellte Anker 10a weist eine Ankerstange 12a auf, die aus ursprünglich zwei Teilen hergestellt ist. Dabei wird als Verankerungsbereich 40 ein Bewehrungsstab mit entsprechenden Vorsprüngen 42 reibschweißend am Übergang 46 mit einem Gewindestab als Gewindebereich 44 verbunden. Durch die Kombination zweier Werkstoffe, beispielsweise Edelstahl für den Gewindebereich 44 und Betonstabstahl für den Verankerungsbereich 40, können optimale Eigenschaften bezüglich der Korrosions- und Verankerungseigenschaften erzielt werden.

## Patentansprüche

1. Anker zur Verankerung mit Mörtel, mit einer ein Gewinde aufweisenden Ankerstange, **dadurch gekennzeichnet, dass** ein schraubenförmig gewundener Draht (22) auf die Ankerstange (12, 12a) aufgesetzt ist und nach Art einer Schraubverbindung in das Gewinde (14) der Ankerstange (12, 12a) eingreift, und dass der Draht (22) mit Abstand von einem hinteren Ende (20) der Ankerstange (12, 12a) in einem hinteren Bereich (18) der Ankerstange (12, 12a) angeordnet ist, der bei verankerter Ankerstange (12, 12a) aus einem Verankerungsgrund (26) vorsteht.

2. Anker nach Anspruch 1, **dadurch gekennzeichnet, dass** der Draht (22) eine Schraubenfeder ist.

3. Anker nach Anspruch 1, **dadurch gekennzeichnet, dass** der Draht (22) klemmend auf dem Gewinde (14) der Ankerstange (12, 12a) sitzt.

4. Anker nach Anspruch 1, **dadurch gekennzeichnet, dass** zwei schraubenförmig gewundene Drähte (22, 24) axial aneinander anliegend auf das Gewinde (14) der Ankerstange (12) aufgesetzt und miteinander verspannt (gekontert) sind.

5. Anker nach Anspruch 4, **dadurch gekennzeichnet, dass** die an einander anliegenden Stirnflächen der Drähte (22, 24) plan sind.

6. Anker nach Anspruch 1, **dadurch gekennzeichnet, dass** die Ankerstange (12a) in ihrem Verankerungsbereich (40) Vorsprünge (42) nach Art von Bewehrungsstäben aufweist.

7. Anker nach Anspruch 6, **dadurch gekennzeichnet, dass** die Ankerstange (12a) in ihrem Verankerungsbereich (40) aus Betonstabstahl und in ihrem Gewindebereich (44) aus Edelstahl besteht.

8. Anker nach Anspruch 7, **dadurch gekennzeichnet, dass** der Verankerungsbereich (40) mit dem Gewindebereich (44) reibgeschweißt verbunden ist.
